Europäisches Patentamt

European Patent Office

Office européen des brevets

(19)

(11) Publication number: **0 199 528**
A2

(12) **EUROPEAN PATENT APPLICATION**

(21) Application number: 86302816.3

(22) Date of filing: 15.04.86

(51) Int. Cl.⁴: **B 01 D 46/24**
**F 02 M 35/024**

(30) Priority: 15.04.85 GB 8509618
07.10.85 GB 8524704

(43) Date of publication of application:
29.10.86 Bulletin 86/44

(84) Designated Contracting States:
AT BE CH DE FR GB IT LI LU NL SE

(71) Applicant: **CUSTOM FOAMS LIMITED**
Units 2-17 Deans Road
Old Wolverton Milton Keynes, MK12 5PU(GB)

(72) Inventor: **Dudden, Michael Robertson**
24, Melton Stantonbury
Milton Keynes MK14 6BH(GB)

(74) Representative: **Spencer, Graham Easdale et al,**
A.A. Thornton & CO Northumberland House 303-306,
High Holborn
London WC1V 7LE(GB)

(54) **Filter.**

(57) A single or multi stage filter has filter material of reticulated foamed plastics material. A surface of the material is profiled to have a plurality of upstanding portions separated from adjacent such portions by trough zones to increase the surface area of that surface, possibly trebled, with respect to a smooth surface of similar dimensions.

FIG.1.

EP 0 199 528 A2

Croydon Printing Company Ltd

- 1 -

## FILTER

The present invention relates to filters. More particularly, but not exclusively, the present invention relates to air filters of foamed plastics material, particularly for use in connection with internal combustion engines.

It is known to use a reticulated plastics material foam to filter the air before its introduction into an internal combustion engine. However, the dust particles which the filter is intended to remove from the air are of varied sizes. If the foam is provided with pores of a comparatively large size, the filter fails to catch the small dust particles. If the filter has pores of a comparatively small size, it quickly becomes clogged by the larger particles of dust.

In an attempt to overcome this problem, it has been proposed to provide laminated filters, which comprise a first layer of material of large pore size intended to catch the larger particles, which layer is adhered to a second layer of foamed material of fine pore size which is intended to filter out the remaining small particles of dust. However, such filters, while an improvement on the single layer type filters, suffer from certain disadvantages.

One disadvantage is that, as the coarse layer of the laminate becomes blocked with dust in certain areas, the fine layer of the laminate adjacent those areas receives no air which renders the filter less effective. Another disadvantage is that the pressure differential between the sides of the filter causes a blocked or partially blocked coarse layer to become compressed against the fine layer, again rendering the filter less effective.

It is an object of the present invention to overcome the above and other disadvantages and provide a more efficient filter.

According to the present invention there is provided a single or multi stage filter, the or at least one layer of filter material being of reticulated foamed plastics material of which a surface is profiled to have a plurality of upstanding portions separated from adjacent such portions by trough zones, whereby the surface area of that surface is increased.

Preferably the surface is so profiled that the area is substantially trebled with respect to a smooth surface of similar dimensions.

The surface may be an "egg-box" surface, that is to say it comprises rows of undulations extending in both one direction and a direction transverse thereto so that the hollows of one row alternate with the crests of an adjacent row. Alternatively it may be thought of as comprising a plurality of pyramid-like protruberances arranged in a pattern on the surface.

Advantageously one surface is profiled and an opposite surface is smooth.

The material of the or each filter is preferably a reticulated foamed plastics material, which may be of porosity between 120 and 10 pores per linear inch, the preferred range being between 60 and 100. Where there are two filters, an inner, relatively fine filter may have a porosity between 65 and 110 pores per linear inch, preferably between 80 and 100 pores per linear inch, while an outer, relatively coarse filter may have a porosity between 10 and 100 ppi, preferably above 30, e.g. 60 ppi.

In cases where the filter of the present invention is a two or more stage filter, it comprises a first comparatively coarse filter and a second comparatively fine filter so spaced from said first filter as to define a space therebetween in which the fluid to be filtered can circulate.

The filters are so profiled that the upstanding portions of one impinge on the adjacent surfaces of the or another filter and the trough zones of the one filter define fluid circulation passages.

Preferably, the or each filter is supported on an air control plate which comprises a plurality of slots.

Where there are two or more air control plates, the slots of one are disposed opposite a non-apertured region of the or another of the air control plates, whereby fluid to be filtered cannot traverse the two filters in a straight line.

The air control plates are preferably cylindrical and the slots of each plate may be aligned parallel to the axis of the respective cylinder. Alternatively the or each filter may be supported by a wire mesh.

The reticulated foamed plastics material of the or each filter may optionally be impregnated with oil, oil and wax mixture or other suitable alternative.

An embodiment of the present invention will now be more particularly described by way of example and with reference to the accompanying drawings, in which:

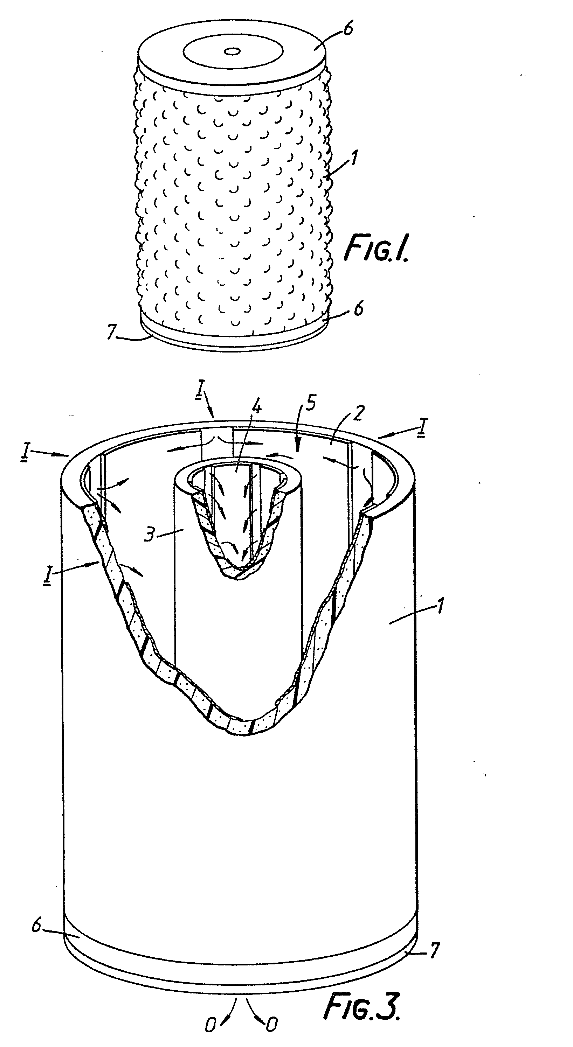

FIGURE 1 is a perspective view of a filter embodying the invention;

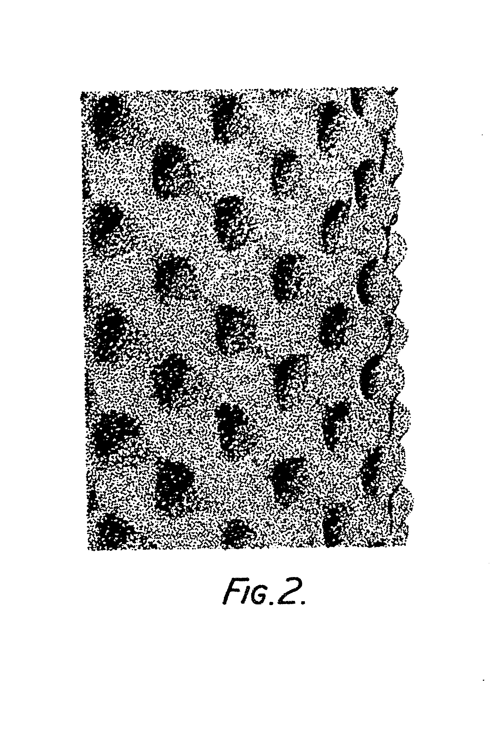

FIGURE 2 is a partial view, to an enlarged scale of the filter of Figure 1; and

FIGURE 3 is a partial cross-sectional view of a two-stage filter embodying the invention.

- 4 -

In order to explain the invention, reference is now made to the drawings, and particularly Figure 3, where there is shown a filter comprising an outer cylinder 1 of reticulated foamed plastics material having a porosity in the region of 45 or higher pores per linear inch. This filter 1 may be, on average, 20 mm thick and is supported on air control plate 2. Disposed substantially concentrically within the outer filter 1 is a second cylindrical filter 3 of reticulated foamed plastics material of porosity of a value above 60 pores per linear inch. The porosity of the inner fine layer of filter may be between 100 and 700 pores per linear inch. This is supported on a smaller diameter air control plate 4. The filter is completed by end caps 6 and a seal 7 at the outflow end. The filter may, if desired, be accommodated in a housing having peripheral air inlet means.

Air to be filtered by the filter enters in the direction of arrows I and exits from the filter along the direction of arrows O. In this passage, it first goes through the outer layer of coarse filter material where large particles of dust are trapped. Having then circulated in the space 5 between layers 1 and 3, it passes through the second inner layer of fine filter material 3 where smaller particles of dust are trapped.

The air control plates 2 and 4 each comprise a cylinder of sheet metal which is provided with a plurality of slots extending parallel to the axis of the cylinder over almost its entire length. The slots of the inner plate 4 are aligned with a non-slotted portion of the outer plate 2.

Because of the non-alignment, the air flow in the space 5 is controlled to have a serpentine path (indicated by arrows in Figure 3). The air entering the space 5 through outer filter 1 cannot pass directly through the inner filter 3 at a region opposite its point of entry, since that is blocked by the inner air control plate 4. The dust particles possess higher kinematic energy than the molecules of air because of their greater mass and thus they tend to curve in an arc of greater radius than that through which the air flow in which they are entrained is constrained to move. From this it can be seen that the majority of the smaller dust particles passing through the outer filter 1, strike the inner filter 3 at points where the air flow is not at a maximum velocity. Accordingly they are far more likely to be retained by the inner filter 3.

The number of slots provided in each plate is not critical. The total area of slots in each plate must be sufficient to allow passage of the required volume of air, without making each slot so wide that it cannot adequately support the foam of the filter at that point.

It has been found that the air passes preferentially through the filters in the region of each slot and that most clogging of the filter is encountered near the surface of the filter in such a region. However at all times, and especially once these regions become clogged, the air flow also enters the filter at a location circumferentially spaced from the slot and travels towards the slot through the reticulated foam in the zone nearer the plate. Since the air flow is slowed further by such a passage, the efficiency of filtration is enhanced.

The pressure differential between points I and O can be of the order of 600 mm water gauge. Of this pressure difference, the major part, typically 550 mm water gauge exists between the inner and outer sides of the outer coarse filter 1. In prior art laminated filters, this large pressure differential squashes the reticulated foamed structure of the coarse layer and thereby blocks air flow to and filtration by the fine filter layer behind. In the present invention, the presence of the gap between the layers ensures that this cannot happen. The reticulated foamed plastics material of filters embodying the invention is profiled to have an increased surface area. The most preferred profile is a so called "egg-box" surface where rows of undulations extend in one direction and in a direction transverse thereto so that the crests of one row alternate with the hollows of an adjacent row.

Alternative profiles are of course possible. The egg-box profile described above may be formed by machining and cutting a length of foam while it is pressed. Similar techniques may be used to produce profiles with parallel grooves or with two sets of grooves, each set being parallel and intersecting the other set to leave pyramid like protrusions.

One further profile of interest is formed by cutting notches into each surface of a comparatively thick piece of foamed plastics material. The notches are of a depth greater than half and less than the full thickness of the material and the notches in each surface are so staggered that a notch from one side lies between 2 notches from the other. When the notched material is pulled, the notches open out to leave a chevrony sheet of material.

The profile of the material gives a number of distinct advantages.

Since the surface area is markedly increased, possibly by three times that of conventional flat material, the amount of air taken in is increased. This enables the pore size to be decreased for the same volume of throughput. For example, if the filter of Figure 3 were constructed from two layers of smooth surfaced material, the ideal pore sizes are in the region of 30 ppi (pores per linear inch) for the coarse outer filter and 90 ppi for the inner. Where both materials have profiled surfaces, the pore sizes may be reduced. Figures of 60 to 100 ppi are advantageous, even for the outer filter.

The size of the air circulation gap 5 can be reduced until in fact the upstanding portions of the inner filter are touching the inner plane surface of the outer filter. The trough areas are quite sufficient to allow diverted air flow with all its attendant advantages.

Also, the upstanding portions may be adhered to the rear of the outer filter, thereby obviating the need for any additional support for the outer layer. Since the pattern of the profiling will determine the directions of air flow, the presence of the control plates 2 and/or 4 is no longer necessary, especially the outer one 2, for the reasons given above. It may in fact prove advantageous for an inner one 4 to be retained, in order to vary or control the flow characteristics of the filter. In any event, some support means should be provided and if the control plates are not present, it may be necessary to provide a wire mesh cylinder, about which are disposed the pair of filters.

The presence of a gap, of whatever form, causes the velocity of the air passing through the filter to reduce on its exit from the outer filter layer and as it does so, dust precipitates from it. In prior art laminated filters this cannot happen as the air goes directly from the coarse layer to the fine layer. Furthermore, as the air circulates in the space 5, the eddy currents produced cause the air to give up yet more dust. The profiling may be designed to increase their effect.

The efficiency of the filter is increased if either of the inner or outer layers is previously impregnated with oil, oil and wax mixture or other suitable alternative.

The invention has been described with reference to filtration of air. It can of course be used to filter other fluids. The reticulated foamed plastics material filter medium may be a polyester, polyether or polyurethane foam.

The invention has been described as a two-stage filter although it would be equally possible to provide three or more stages of succeeding degrees of fineness, or even a single filtering stage. Finally although the preferred embodiment is a cylindrical filter, the invention is equally applicable to panel filters.

As well as increasing the efficiency of dust collection of the air filter, use of filters embodying the invention can be expected to reduce engine noise.

CLAIMS:

1.      A single or multi stage filter comprising at least one layer of filter material of reticulated foamed plastics material of which a surface is profiled to have a plurality of upstanding portions separated from adjacent such portions by trough zones, whereby the surface area of that surface is increased.

2.      A filter as claimed in claim 1, wherein said surface is an "egg-box" surface, as hereinbefore defined.

3.      A filter as claimed in either claim 1 or claim 2, wherein one surface of said filter material is profiled and an opposite surface thereof is smooth.

4.      A filter as claimed in any one of the preceding claims, wherein the material of the or each filter is a reticulated foamed plastics material of porosity between 120 and 10 pores per linear inch.

5.      A filter as claimed in claim 4, wherein said porosity is between 60 and 100 pores per linear inch.

6.      A filter as claimed in any one of the preceding claims, comprising a first comparatively coarse filter and a second comparatively fine filter so spaced from said first filter as to define a space therebetween in which the fluid to be filtered can circulate.

7.      A filter as claimed in claim 6, wherein the filters are so profiled that the upstanding portions of one contact the adjacent surface of the other filter and the trough zones of the one filter define fluid circulation passages.

8.  A filter as claimed in any one of the preceding claims, wherein the or each filter is supported on a fluid control plate which comprises a plurality of slots.

9.  A filter as claimed in claim 8, comprising two or more filters, each supported on a respective air control plate, the slots of one being disposed opposite a non-apertured region of the other air control plate, whereby fluid to be filtered cannot traverse the two filters in a straight line.

10.  A filter as claimed in either claim 8 or claim 9, wherein the or each air control plate is cylindrical and the slots thereof are aligned parallel to the axis of the respective cylinder.

11.  A single or multi stage filter substantially as described herein with reference to the accompanying drawings.

1/2

0199528

Fig.1.

Fig.3.

FIG.2.